# EUROPÄISCHE PATENTSCHRIFT

(11) **EP 0 670 197 B1**
(45) Veröffentlichungstag und Bekanntmachung des Hinweises auf die Patenterteilung: **12.11.1997**
(21) Anmeldenummer: 95100909.1
(22) Anmeldetag: 24.01.1995
(51) Int. Cl.: B23Q 7/14, H02G 5/00, H02G 3/00

(54) **Förderstrasse mit aufeinanderfolgenden Förderabschnitten und mit gemeinsamer Stromschiene**
Conveyor track with successive conveyor sections and common busbar.
Voie de transport avec des sections successives de transporteur et barre conductrice commune

(30) Priorität: 02.02.1994 DE 4403132
(43) Veröffentlichungstag der Anmeldung: 06.09.1995
(73) Patentinhaber: Deutsche Gardner-Denver GmbH & Co, 73463 Westhausen (DE)
(72) Erfinder: Mayer, Otto, D-73466 Lauchheim (DE); Kluge, Manfred, D-73457 Essingen (DE)
(74) Vertreter: Grünecker, Kinkeldey, Stockmair & Schwanhäusser Anwaltssozietät

(56) Entgegenhaltungen:
- EP-A- 0 115 357
- WO-A-89/10234
- DE-A- 2 839 530
- DE-A- 3 437 586
- FR-A- 2 568 861

## Beschreibung

Die Erfindung betrifft eine Förderstraße mit aufeinanderfolgenden Förderabschnitten nach dem Oberbegriff des Anspruches 1.

Derartige Förderstraßen sind aus DE-A-2 839 530 vorbekannt und werden in der Industrie zum Fördern und Manipulieren von Werkstücken benutzt. So führen derartige Förderstraßen zu bearbeitende Werkstücke Arbeitsstationen zu, in denen - bei in Förderrichtung stehenden Werkzeugen - Bearbeitungen vorgenommen werden. Das Werkstück muß auf der Förderstraße der Arbeitsstation gezielt zuführbar sein, wobei die die Förderglieder wie Schnecken, Wellen, Bänder oder dgl. antreibenden Elektromotoren der einzelnen Förderabschnitte ein- oder ausgeschaltet, reversierbar betrieben oder in der Drehzahl eingestellt werden. Die Elektromotoren einer Förderstraße werden einzeln über einen jeweiligen Steuerkasten mit der Spannungsquelle verbunden. Über in den Steuerkasten mündende Steuerleitungen werden die notwendigen Funktionen, Einschalten, Ausschalten, Drehrichtung und Drehzahl des Elektromotors eingestellt.

Bei einer derartigen Förderstraße müssen nicht unerhebliche Mengen an elektrischen Leitungen verlegt werden, wozu oft parallel zur Förderstraße verlaufende Kabelkanäle oder dgl. vorgesehen sind. Bei Förder- bzw. Fertigungsanlagen müssen dabei oft Tausende von Metern an Kabeln installiert werden, was zeit- und kostenaufwendig ist. Tritt ein Fehler auf, sind die einzelnen Leitungen mühsam zu prüfen. Dabei ist auch zu berücksichtigen, daß die notwendigen einzelnen elektrischen Steckeranschlüsse teileaufwendig, teuer und dennoch störanfällig sind.

Der Erfindung liegt die Aufgabe zugrunde, bei einer Förderstraße der genannten Gattung einen einfachen, Bauteile senkenden elektrischen Anschluß der Antriebsmotoren an elektrische Energie zuführenden Leitungen anzugeben.

Die Aufgabe wird erfindungsgemäß nach den kennzeichnenden Merkmalen des Anspruches 1 gelöst.

Dadurch, daß die Elektromotoren aufeinanderfolgender Förderabschnitte über eine gemeinsame Stromschiene mit Energie gespeist sind, können einzelne elektrische Anschlußleitungen eingespart werden. Der die elektrische Verbindung zwischen dem Elektromotor und der Energiezuführung vorgesehene Steuerkasten ist als steckerähnlicher Anschlußkasten ausgebildet, der etwa am Ort des Elektromotors mit der Stromschiene verbunden wird, um den elektrischen Kontakt herzustellen.

Bevorzugt sind die Steuerleitungen für die Elektromotoren in der Stromschiene integriert und am Ort des jeweiligen Elektromotors über einen steckerähnlichen Anschlußkasten mit dem entsprechenden Steuerkasten des Elektromotors verbunden.

Auf diese Weise entfallen auch ansonsten zu verlegende elektrische Steuerleitungen.

Bevorzugt werden die über die Länge der Förderstraße nacheinander angeordneten Arbeitsstationen jeweils über einen steckerähnlichen Anschluß mit der Stromschiene verbunden, so daß auch die Energiezuführung zu den Arbeitsstationen über die Stromschiene erfolgen kann, wobei die Steuerleitungen auch zur Steuerung der Funktionen der Arbeitsstation, z. B. für deren gemeinsames Ein- und Ausschalten, verwendbar sind.

Der die elektrische Verbindung herstellende Anschlußkasten und der die Verbindung mit den Steueranschlüssen herstellende Anschlußkasten haben bevorzugt ein gemeinsames Gehäuse, so daß mit dem Anschluß der elektrischen Energieversorgung gleichzeitig der Steueranschluß an eine Zentralsteuerung gewährleistet ist.

Ein an der Förderstraße vorgesehener Sensor ist zweckmäßig über einen Anschlußkasten, z. B. den eines benachbarten elektrischen Verbrauchers, mit den Steuerleitungen verbunden. Diese Steuerleitungen bilden bevorzugt einen Bus, wobei in einem für die Verbindung mit dem Bus vorgesehenen Anschlußkasten eine elektronische Empfangs- und/oder Sendeeinheit angeordnet ist, die - vorzugsweise über die Stromschiene mit Niederspannung gespeist - mit dem Bus verbunden ist.

Die Anschlußkästen aller Anschlüsse sind bevorzugt gleich, so daß sie untereinander austauschbar sind. Lediglich die im Anschlußkasten vorgesehenen Baugruppen, die entsprechend der gewünschten Steuerung bzw. des entsprechend des angeschlossenen elektrischen Verbrauchers angepaßt vorzusehen sind, müssen bei Wechsel von Anschlußkästen ausgetauscht werden. Dabei können diese Baueinheiten als Module vorgesehen sein, so daß mit wenigen Bauteilen eine einfache und kostengünstige Instandhaltung der Gesamtanlage gewährleistet ist.

Weitere Merkmale der Erfindung ergeben sich aus den weiteren Ansprüchen, der Beschreibung und der Zeichnung, in der nachfolgend im einzelnen beschriebene Ausführungsbeispiele der Erfindung dargestellt sind. Es zeigen:
- Fig. 1: eine perspektivische Ansicht einer Förderstraße mit über die Länge der Förderstraße verlaufender Stromschien und Anschlußkästen,
- Fig. 2: in vergrößerter Darstellung eine Abgangstelle der Stromschiene mit zugeordnetem Anschlußkasten,
- Fig. 3: in schematischer Darstellung ein mögliches Anschlußschema einzelner elektrischer Verbraucher an die Stromschiene.

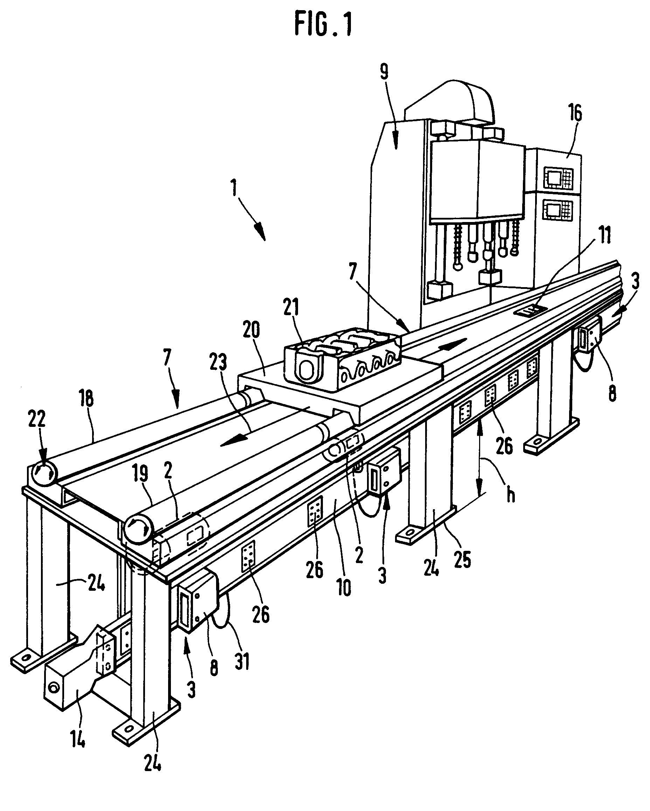

Die in Fig. 1 dargestellte Förderstraße 1 besteht aus parallel liegenden Antriebswellen 18, 19, die von Elektromotoren 2 angetrieben sind. Die Antriebswellen bilden eine Förderbahn und tragen einen Werkstückträger 20, auf dem ein Werkstück 21 angeordnet ist. Durch Drehung der Antriebswellen 18, 19 in Pfeilrichtung 22 wird der Werkstückträger 20 mit dem Werkstück 21 in Pfeilrichtung 23 längs der Förderbahn bewegt, um z. B. einer Arbeitsstation 9 zugeführt zu werden, die im gezeigten Ausführungsbeispiel eine Schraubstation ist.

Die Förderbahn ist auf Ständern 24 getragen und weist so zum Boden 25 einen Abstand auf. Unterhalb der Förderbahn ist zwischen je zwei einander gegenüberliegenden Ständern 24 längs der Förderbahn eine Stromschiene 10 angeordnet, welche mit Abstand h etwa parallel zum Boden 25 verläuft. Der Abstand h ist so gewählt, daß die Stromschiene 10 im Arbeitsbereich einer Bedienungsperson liegt. Bevorzugt ist die Stromschiene 10 auf den Ständern 24 einer Seite festgelegt, insbesondere auf deren Innenseite. Die Stromschiene 10 liegt so vollständig unterhalb der Förderstraße 1 und benötigt keinen außerhalb der Förderstraße 1 liegenden Bauraum.

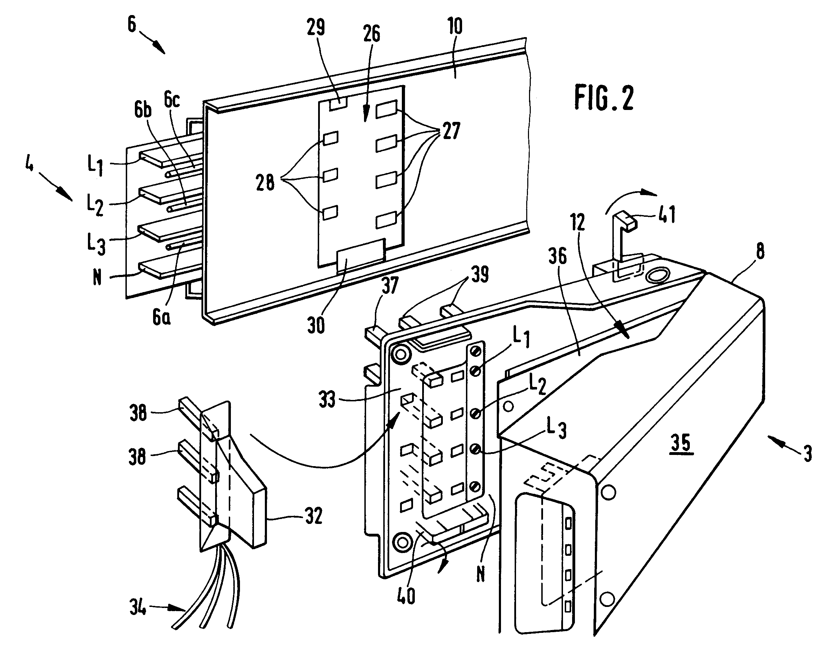

Über die Länge der Stromschiene 10 sind - bevorzugt in äquidistanten Abständen a - Anschlußfenster 26 vorgesehen, die steckdosenähnlich ausgebildet sind. Ein derartiges Anschlußfenster 26 ist in Fig. 2 vergrößert dargestellt. Es hat im wesentlichen rechteckige Grundform und weist auf einer Längsseite 4 nebeneinanderliegende Stecköffnungen 27 und auf der anderen Längsseite 3 nebeneinanderliegende Stecköffnungen 28 auf. An einer Schmalseite ist eine Einführöffnung 29 und an der anderen Schmalseite eine Verriegelungsöffnung 30 vorgesehen. Auf der dem Anschlußfenster 26 abgewandten Seite der Stromschiene sind die Stecköffnungen 27 mit stromführenden Leitern L1, L2, L3, N einer Drehstromspannungsversorgung 4 verbunden, die - wie in Fig. 1 gezeigt - über einen Einspeisekasten 14 an die Stromschiene 10 angeschlossen ist. Zwischen den Leitern der Spannungsversorgung 4 liegt jeweils eine Steuerleitung 6a, 6b, 6c, welche mit den Stecköffnungen 28 verbunden sind. Die Steuerleitungen 6 liegen genau in den Lücken der Leitungen der Spannungsversorgung 4, so daß sowohl die Steuerleitungen 6 wie die Leitungen L1, L2, L3 und N der Spannungsversorgung 4 zueinander etwa parallel liegend längs der Stromschiene 10 verlaufen und jeweils mit Anschlußfenstern 26 in Verbindung stehen. Zum Anschluß der Elektromotoren 2 aufeinanderfolgender Förderabschnitte 7 an die Spannungsversorgung 4 ist jeweils ein Anschlußkasten 3 vorgesehen, welcher entsprechende Steckkontakte 37 aufweist, die in die Stecköffnungen 27 für die Spannungsversorgung eingreifen. Über den Anschlußkasten 3 und ggf. in dem Anschlußkasten 3 integrierte Schalteinheiten ist der Elektromotor mittels eines Kabels 31 verbunden. Sofern mit dem Anschlußkasten 3 gleichzeitig eine Verbindung zu den Steuerleitungen 6 geschaffen werden soll, wird im Boden 33 des Anschlußkastens 3 ein Stecker 32 angeordnet, der mit seinen Steckkontakten 38 den Boden 33 des Gehäuses 8 des Anschlußkastens 3 durchgreift, um in den Stecköffnungen 28 des Anschlußfensters 26 eine elektrische Verbindung mit den Steuerleitungen 6 herzustellen.

Der Anschlußkasten 3 wird ähnlich eines Steckers mit seinen Steckkontakten 37 und ggf. 38 in die Stecköffnungen 27, 28 eingeführt, wobei ein in die Einführöffnung 29 eingreifender Stift 39 das Einstecken abdichtet. Eine Rastnase 40 greift in die Verriegelungsöffnung 30, so daß nach Umlegen eines Klemmhebels 41 der Anschlußkasten 3 unverlierbar an der Stromschiene gehalten ist.

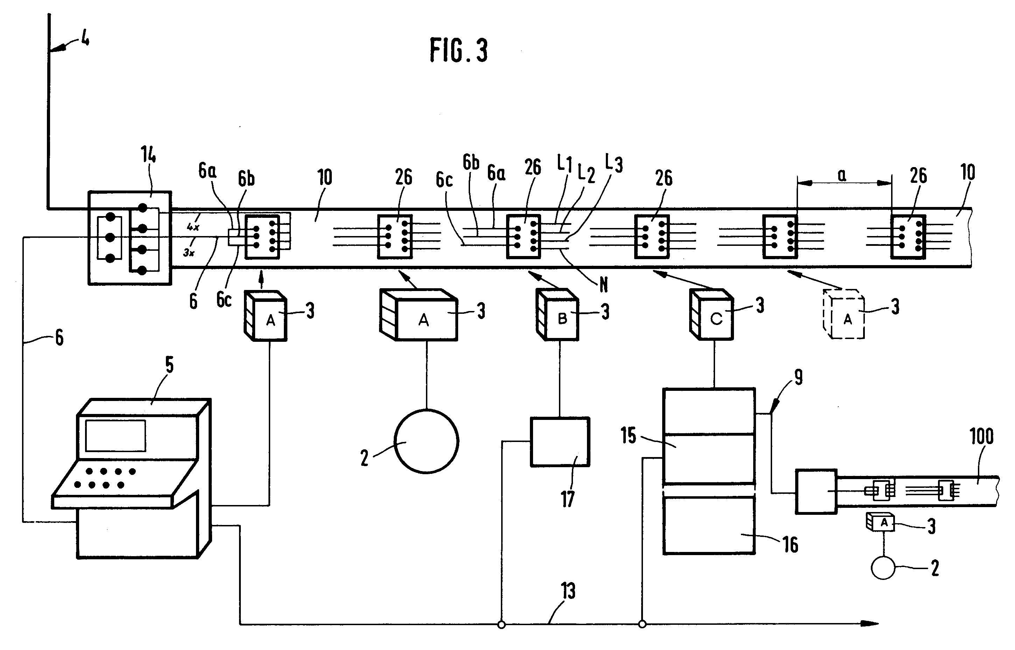

Die Anschlußleitungen 34 des Steckers 32 werden im Gehäuse 8 mit einer nicht näher dargestellten Sende- und/oder Empfangseinheit 12 verbunden, die ihrerseits z. B. einen Motorschütz, einen Drehrichtungssteller bzw. einen Drehzahlsteller steuert. Dabei sind die Steuerleitungen 6 derart vorgesehen, daß über die Steuerleitungen 6a und 6c die notwendige Spannungsversorgung der Sende-/Empfangseinheit 12 gewährleistet ist, während die Leitung 6b die Datenleitung darstellt. Auf diese Weise ist es möglich, von einer zentralen Steuereinheit 5 (Fig. 3) alle an die Stromschiene 10 angeschlossenen Elektromotoren 2 der Förderstraße 1 gemeinsam ein-/auszuschalten bzw. eine Drehrichtungsschaltung bzw. Drehzahlschaltung vorzunehmen.

Die Steuerleitungen 6 bilden einen dreiadrigen Leitungsbus, welcher als Datenbus genutzt werden kann. Zweckmäßig werden weitere Datenleitungen in einen derartigen Bus eingebunden, um weitere Funktionen zu steuern bzw. um über die Länge der Förderstraße 1 angeordnete Sensoren 11 mit der Zentralsteuerung 5 zu verbinden. In Abhängigkeit der Signale der Sensoren können dann die Werkstückträger gesteuert werden, wobei durch entsprechende Leseeinrichtungen (Sensor 11) ein Erkennen der Werkstücke 21 möglich ist.

In Fig. 3 ist in schematischer Darstellung eine Stromschiene 10 gezeigt, welche an einem Kopfende mittels eines Einspeisekasten 14 an eine dreiphasige Spannungsquelle angeschlossen ist. Zwischen den parallel zueinander längs der Stromschiene 10 verlaufenden Leitungen der Spannungsversorgung 4 liegt jeweils eine Steuerleitung 6a, 6b, 6c, so daß über die Länge der Stromschiene 10 drei Steuerleitungen 6 verlaufen. Es kann zweckmäßig sein, mehr als drei Steuerleitungen 6 anzuordnen, so daß ein n-adriger Datenbus möglich wird. Bei dem im Ausführungsbeispiel gezeigten dreiadrigen Bussystem ist die Möglichkeit gegeben, einzelne Verbraucher z. B. die Elektromotoren 2 der Förderstraße 1 über einen entsprechend ausgerüsteten Anschlußkasten 3 ein- bzw. auszuschalten. Auch können die längs der Förderstraße 1 angeordneten anderen elektrischen Verbraucher, so z. B. die Zentralsteuerung 5, eine dezentrale Transportsteuerung 17 oder eine Arbeitsstation 9 (Schraubstation) über die Stromschiene 10 an die Spannungsversorgung 4 angeschlossen werden. Dabei ist es auch möglich, in der Arbeitsstation 9 eine weitere Leistungsverzweigung mit einer Stromschiene 100 vorzusehen, um z. B. in der Arbeitsstation 9 vorgesehene Förderstraßen wie vorstehend beschrieben zu betreiben. Die Arbeitsstation 9 weist z. B. eine LCD-Anzeige 15 auf, mit der eine Steuerung 16 gehandhabt wird, welche einen vollautomatischen Betrieb der Arbeitsstation 9 gewährleistet. Da beim Ausführungsbeispiel ein dreiadriger Datenbus 6 vorgesehen ist, müssen die von der zentralen Steuerung 5 vorgesehenen Steuerdaten für die dezentrale Transportanlage 17 wie für die Arbeitsstation 9 über einen weiteren Datenbus 13 übermittelt werden. Sofern die Kapazität der in der Stromschiene 10 vorgesehenen Steuerleitungen ausreichend sind, kann der Datenbus 6 und der Datenbus 13 zusammengefaßt werden, so daß auch die dezentrale Transportsteuerung 17 und die Arbeitsstation 9 die für den Betrieb notwendigen Steuerdaten über den jeweiligen Anschlußkasten 3 erhält.

Der Anschlußkasten 3 besteht bevorzugt aus einem bodenbildenden Gehäuseteil 33 und einem deckelbildenden Gehäuseteil 35; nach Abnahme des Deckels 35 sind die durch eine Halteschiene 36 im Gehäuse 8 fixierten Baugruppen zur Wartung und Montage frei zugänglich. Da die Gehäuse 8 aller Anschlußkästen 3 gleich sind und die Anpassung an den Einsatzfall durch Auswahl der zu montierenden Baugruppen möglich ist, können defekte Anschlußkästen 3 durch Auswechseln entsprechend bestückter Anschlußkästen einfach ausgetauscht werden, ohne daß die Förderstraße länger steht.

## Patentansprüche

1. Förderstraße mit aufeinanderfolgenden Förderabschnitten (7), die durch je einen zugeordneten Elektromotor (2) antreibbar sind, mit einem Steuerkasten (3) zum Anschluß des jeweiligen Elektromotors (2) an eine Spannungsversorgung (4) sowie mit einer Zentralsteuerung (5)), die über Steuerleitungen (6) mit dem Steuerkasten (3) verbunden ist, um den Elektromotor (2) ein-/auszuschalten und/oder seine Drehzahl sowie seine Drehrichtung einzustellen,
dadurch gekennzeichnet, daß die Elektromotoren (2) aufeinanderfolgender Förderabschnitte (7) über eine gemeinsame Stromschiene (10) mit Energie gespeist sind, und daß der Steuerkasten (3) am Ort des Elektromotors (2) als steckerähnlicher Anschlußkasten die elektrische Verbindung mit der Stromschiene (10) herstellt.

2. Förderstraße nach Anspruch 1,
dadurch gekennzeichnet, daß die Steuerleitungen (6) in der Stromschiene (10) integriert sind und am Ort des jeweiligen Elektromotors (2) über einen steckerähnlichen Anschlußkasten mit dem entsprechenden Steuerkasten (3) verbunden sind.

3. Förderstraße nach Anspruch 1 oder 2,
dadurch gekennzeichnet, daß über die Länge der Förderstraßen nacheinander angeordnete Arbeitsstationen (9) über einen steckerähnlichen Anschlußkasten (3) mit der Stromschiene (10) verbindbar sind.

4. Förderstraße nach einem der Ansprüche 1 bis 3,
dadurch gekennzeichnet, daß der Anschlußkasten (3) des elektrischen Anschlusses und der Anschlußkasten (3) für die Steuerleitungen (6) ein gemeinsames Gehäuse (8) haben.

5. Förderstraße nach einem der Ansprüche 1 bis 4,
dadurch gekennzeichnet, daß ein an der Förderstraße (1) angeordneter Sensor (11) über einen Anschlußkasten (3) mit den Steuerleitungen (6) verbunden ist.

6. Förderstraße nach einem der Ansprüche 1 bis 5,
dadurch gekennzeichnet, daß die Steuerleitungen (6) einen Datenbus bilden.

7. Förderstraße nach Anspruch 6,
dadurch gekennzeichnet, daß in einem Anschlußkasten (3) eine Empfangs-/Sendeeinheit (12) angeordnet ist, die - vorzugsweise über die Stromschiene (10) mit Niederspannung gespeist - mit dem Bus (6) verbunden ist.

8. Förderstraße nach einem der Ansprüche 1 bis 7,
dadurch gekennzeichnet, daß die Anschlußkästen (3) aller Anschlüsse gleich sind.

## Claims

1. Conveyor line with successive conveyor sections (7) which can each be driven by an associated electric motor (2), with a control box (3) for connection of the respective electric motor (2) to a voltage supply (4) as well as with a central control system (5) which is connected by control wires (6) to the control box (3) to switch the electric motor (2) on and off and/or to adjust its speed as well as its direction of rotation, characterised in that the electric motors (2) of successive conveyor sections (7) are supplied with energy via a common bus bar (10), and in that the control box (3) makes the electrical connection with the bus bar (10) at the location of the electric motor (2) as a plug-like connector box.

2. Conveyor line according to claim 1, characterised in that the control wires (6) are integrated in the bus bar (10) and connected to the corresponding control box (3) at the location of the respective electric motor (2) via a plug-like connector box.

3. Conveyor line according to claim 1 or 2, characterised in that work stations (9) arranged one after the other over the length of the conveyor lines can be connected to the bus bar (10) via a plug-like connector box (3).

4. Conveyor line according to any of claims 1 to 3, characterised in that the connector box (3) of the electrical connection and the connector box (3) for the control wires (6) have a common housing (8).

5. Conveyor line according to any of claims 1 to 4, characterised in that a sensor (11) arranged on the conveyor line (1) is connected by a connector box (3) to the control wires (6).

6. Conveyor line according to any of claims 1 to 5, characterised in that the control wires (6) form a data bus.

7. Conveyor line according to claim 6, characterised in that in a connector box (3) is arranged a receiving/transmitting unit (12) which - preferably supplied with low voltage via the bus bar (10) - is connected to the bus (6).

8. Conveyor line according to any of claims 1 to 7, characterised in that the connector boxes (3) of all connections are the same.

## Revendications

1. Voie de transfert comprenant des tronçons de transfert successifs (7) pouvant être entraînés chacun au moyen d'un moteur électrique (2) respectivement associé à ceux-ci, comportant une boîte de commande (3) pour le raccordement du moteur électrique correspondant (2) à un système d'alimentation en courant (4), et comportant une commande centrale (5) reliée à la boîte de commande (3) par l'intermédiaire de conducteurs de commande (6) en vue de mettre en marche/ d'arrêter le moteur électrique (2) et/ou en vue d'en régler le régime et le sens de rotation, caractérisée en ce que les moteurs électriques (2) des tronçons de transfert successifs (7) sont alimentés en énergie à partir d'une barre conductrice de courant commune (10), et en ce que la boîte de commande (3) établit la liaison électrique avec la barre conductrice de courant (10) à l'emplacement du moteur électrique (2), sous forme d'un boîtier de raccordement similaire à une prise de courant.

2. Voie de transfert selon la revendication 1, caractérisée en ce que les conducteurs de commande (6) sont intégrés dans la barre conductrice de courant (10) et sont reliés à la boîte de commande (3) correspondante, à l'emplacement du moteur électrique (2) correspondant, par l'intermédiaire d'une boîte de raccordement similaire à une prise de courant.

3. Voie de transfert selon la revendication 1 ou 2, caractérisée en ce que des postes de travail (9) disposés les uns derrière les autres sur toute la longueur des voies de transfert peuvent être branchés sur la barre conductrice de courant (10) par l'intermédiaire d'une boîte de raccordement (3) similaire à une prise de courant.

4. Voie de transfert selon l'une des revendications 1 à 3, caractérisée en ce que la boîte de raccordement (3) réalisant le branchement électrique, et la boîte de raccordement (3) pour les conducteurs de commande (6), comportent un carter commun (8).

5. Voie de transfert selon l'une des revendications 1 à 4, caractérisée en ce qu'un capteur (11) disposé le long de la voie de transfert (1) est relié aux conducteurs de commande (6) par l'intermédiaire d'une boîte de raccordement (3).

6. Voie de transfert selon l'une des revendications 1 à 5, caractérisée en ce que les conducteurs de commande (6) constituent un bus de données.

7. Voie de transfert selon la revendication 6, caractérisée en ce qu'une unité de récepteur/émetteur (12) est disposée dans une boîte de raccordement (3) et est reliée au bus (6) - en étant de préférence alimentée en basse tension à partir de la barre conductrice de courant (10).

8. Voie de transfert selon l'une des revendications 1 à 7, caractérisée en ce que les boîtes de raccordement (3) de tous les points de branchement sont identiques.
